# FASCICULE DE BREVET EUROPEEN

(11) **EP 0 451 513 B1**
(45) Date de publication et mention de la délivrance du brevet: **06.09.1995**
(21) Numéro de dépôt: 91103675.4
(22) Date de dépôt: 11.03.1991
(51) Int. Cl.: H04L 12/56

(54) **Elément de commutation de type ATM à plusieurs modes de fonctionnement et réseau de commutation le comprenant**
ATM-artiges Vermittlungselement mit mehreren Betriebsarten und dieses enthaltendes Vermittlungsnetzwerk
ATM-type switching element with several operation modes and switching network including same

(30) Priorité: 14.03.1990 FR 9003244; 14.03.1990 FR 9003245
(43) Date de publication de la demande: 16.10.1991
(73) Titulaire: ALCATEL N.V., NL-1077 XX Amsterdam (NL)
(72) Inventeur: Eilenberger, Gert, W-7312 Kirchheim (DE); Schrodi, Karl, W-7258 Heimsheim (DE); Pfeiffer, Bodo, W-7150 Schwieberdingen (DE); Delmas, Jean-Michel, F-92120 Montrouge (FR)
(74) Mandataire: Weinmiller, Jürgen

(56) Documents cités:
- EP-A- 0 317 930
- WO-A-89/00366
- BRITISH TELECOMMUNICATIONS ENGINEERING, vol. 6, partie 2, juillet 1987, pages 85-104; M. LITTLEWOOD et al.: "Network evolution using asynchronous time-division techniques"

## Description

La présente invention concerne un commutateur élémentaire à plusieurs modes de fontionnement, ainsi qu'un réseau de commutation en faisant application. Bien que l'invention soit d'application plus large, on traitera dans ce qui suit, à titre d'exemple et pour fixer les idées, de son emploi dans le cadre de la commutation de cellules à multiplexage temporel asynchrone.

Les cellules, aussi appelées paquets, sont des unités d'information numérique comprenant notamment une étiquette contenant une indication permettant d'identifier la destination de la cellule, ainsi que des données de communication. De telles cellules, relatives à plusieurs communications se suivent dans un ordre quelconque sur une même liaison de transmission.

Un commutateur élémentaire, dans le cas de la commutation de telles cellules à multiplexage temporel asynchrone comprend des entrées, des sorties, des moyens de retransmission sélective, pour retransmettre une cellule reçue sur une de ses entrées, sur une ou plusieurs de ses sorties en fonction de données d'acheminement associées à cette cellule, ainsi que, généralement, des moyens de commande de retransmission déterminant le mode de fonctionnement desdits moyens de retransmission.

Un réseau de commutation employant un tel commutateur élémentaire comprend des ports d'entrée et des ports de sortie, ainsi que des commutateur élémentaires, disposés entre les ports d'entrée et les ports de sorties. Ces commutateurs élémentaires sont arrangés en un ou plusieurs étages et interconnectés par des mailles. Les ports d'entrée du réseau de commutation sont associés aux entrées de commutateurs élémentaires d'un premier étage, tandis que les ports de sortie sont associés aux sorties de commutateur élémentaires d'un dernier étage. Les sorties des commutateurs élémentaires dudit premier étage sont couplées par des mailles, éventuellement au travers d'étages intermédiaires de commutateurs élémentaires, aux entrées des commutateurs élémentaires dudit dernier étage.

Ce réseau, dans la commutation de cellules, a pour fonction d'acheminer des cellules, sélectivement, entre, à chaque fois, un port d'entrée du réseau et au moins un port de sortie. Plus précisément, on prévoira au moins l'acheminement dit de point à point, d'un port d'entrée à un port de sortie, et l'acheminement dit de point à multipoint, entre un port d'entrée et plusieurs ports de sortie.

On trouvera, dans les demandes de brevets français FR-A-2623954 et FR-A-2623953, la description d'un commutateur élémentaire pouvant convenir à la réalisation d'un tel réseau de commutation.

Ce commutateur élémentaire reçoit des cellules sur ses entrées et les retransmet sélectivement sur ses sorties. Deux formes de réalisation du commutateur élémentaire sont présentées. La première de ces formes, dite ci-après à acheminement direct, répond au cas où les cellules reçues comprennent, dans une étiquette, une indication de destination. Dans le commutateur élémentaire, par simple décodage, cette indication de destination fournit l'identité d'au moins une sortie sur laquelle la cellule doit être retransmise, identité qui est alors directement utilisée pour commander la retransmission de cette cellule sur chaque sortie ainsi désignée. Comme la cellule est prévue pour traverser d'autres commutateurs élémentaires, dans un réseau de commutation, l'indication de destination comprend plusieurs parties qui sont utilisées successivement. La seconde de ces formes, dite ci-après à acheminement traduit, répond au cas où l'étiquette contient un numéro de référence dit numéro de circuit virtuel. Dans chaque commutateur élémentaire, ce numéro de référence sert à adresser une mémoire de traduction qui fournit en échange l'identité d'au moins une sortie sur laquelle la cellule doit être retransmise.

On remarquera que, dans ces deux formes d'acheminement, le commutateur élémentaire lui-même n'intervient en rien dans la désignation des sorties sur lesquelles la cellule est retransmise. En fait, un organe extérieur au réseau de commutation doit fournir les données d'acheminement identifiant le ou les trajets des cellules dans le réseau de commutation, c'est-à-dire soit l'indication de destination contenue dans l'étiquette des cellules, pour la première forme de commutateur élémentaire considérée, soit les données inscrites dans les mémoires de traduction des commutateurs élémentaires, en ce qui concerne la deuxième forme de commutateurs élémentaires considérée.

Le commutateur élémentaire à acheminement direct est particulièrement attractif, en raison de sa simplicité : il suffit de décoder l'indication de destination pour en déduire la désignation de la sortie sur laquelle doit être retransmise une cellule, dans un acheminement de point à point, ou les désignations des sorties sur lesquelles la cellule doit être retransmise, dans le cas d'un acheminement de point à multipoint. Son inconvénient est qu'il n'est en pratique plus applicable, dès que le réseau de commutation doit assurer la diffusion d'une cellule qui lui parvient sur un port d'entrée quelconque, à destination de plusieurs ports de sortie quelconques. En effet, on doit alors prévoir que la diffusion peut devoir s'opérer dans un commutateur élémentaire quelconque du réseau de commutation ; dans ce commutateur élémentaire, une cellule reçue est retransmise, à l'identique, sur plusieurs sorties. Plusieurs commutateurs élémentaires de l'étage suivant, dans le réseau de commutation recevront ces cellules identiques. Il n'auront donc pas le moyen d'acheminer la cellule, chacun en ce qui le concerne, vers une sortie spécifiée quelconque, désignée par une indication de destination spécifique de l'étiquette de la cellule. On voit ainsi que cette forme de commutateur élémentaire n'est applicable, dans un réseau de commutation à plusieurs étages de commutateurs élémentaires, que dans le dernier étage, et ne permet alors que la diffusion sur les sorties d'un seul commutateur élémentaire, ce qui ne suffit pas au besoin énoncé.

Le commutateur élémentaire à acheminement traduit répond bien au besoin énoncé plus haut en matière de diffusion vers des ports de sortie quelconques, mais présente des inconvénients propres. En effet, la mémoire de traduction de chacun des commutateurs élémentaires doit recevoir les identités de sorties pour chacun des numéros de référence susceptibles d'être acheminés par ce commutateur élémentaire. Comme le numéro de référence ne doit pas comprendre un trop grand nombre de chiffres, pour des raisons d'efficacité de transmission, le nombre de numéros de référence disponibles est limité, et cela oblige à les réutiliser, ce qui conduit à la nécessité de fournir à chaque fois de nouvelles identités de sorties dans les mémoires de traduction des commutateurs élémentaires, puis de les effacer plus tard, et exige des moyens de transmission coûteux à cet effet. Il existe même des configurations de réseaux de commutation dans lesquelles les premiers étages brassent le trafic, de sorte qu'une cellule peut être acheminée sur une sortie quelconque de ces premiers étages avant d'être aiguillée vers sa destination. On en conclut alors que l'acheminement de toute cellule doit être précédé de la fourniture de données d'acheminement pratiquement à tous les commutateurs élémentaires du réseau de commutation. Cela peut être impraticable lorsque le nombre de commutateurs élémentaires est élevé.

La présente invention vise à résoudre ce problème en proposant un commutateur élémentaire offrant les avantages des deux formes de commutateurs élémentaires décrites, mais largement affranchi des inconvénients précédemment mentionnés, ainsi qu'un réseau de commutation composé, en partie au moins, de tels commutateurs élémentaires et tirant profit de leurs caractéristiques avantageuses.

Plus généralement, le commutateur élémentaire de l'invention trouvera application dès qu'il s'agit d'acheminer de l'information, par commutation, en appliquant les deux modes d'acheminement évoqués au moins, quelle que soit la forme dans laquelle se présente l'information à acheminer. Le terme cellule, tel qu'il est employé dans le présent texte, ne doit donc pas être conçu comme renvoyant à une forme de présentation particulière de l'information commutée, mais au contraire revêtir la plus large acception.

La présente invention a donc pour premier objet un commutateur élémentaire à plusieurs modes de fonctionnement, applicable notamment pour la commutation de cellules à multiplexage temporel asynchrone, dans lequel lesdits moyens de commande de retransmission comprennent notamment :
- un dispositif d'acheminement direct, pour recevoir de l'étiquette d'une cellule reçue sur l'une des entrées une indication de destination et pour la décoder en une identité de sortie correspondant à une sortie au moins, en vue de la retransmission de la cellule sur une sortie désignée à partir de cette identité,
- un dispositif d'acheminement traduit, pour recevoir de l'étiquette d'une cellule reçue sur l'une des entrées un numéro de référence et pour le traduire, à l'aide d'une mémoire de traduction, en une ou plusieurs identités de sortie, correspondant chacune à une sortie au moins, en vue de la retransmission de la cellule sur une sortie pour chaque identité de sortie, désignée à partir de cette identité,
- des moyens de sélection de mode d'acheminement, prévus pour recevoir de l'étiquette d'une cellule reçue sur l'une des entrées une donnée de mode d'acheminement et prévus pour commander sélectivement, en fonction de cette donnée, la mise en oeuvre d'un dispositif d'acheminement sélectionné pouvant être l'un des dispositifs d'acheminement susmentionnés, de sorte que les communications de point à point peuvent être assurées sans le recours à la mémoire de traduction, et sont donc affranchies des inconvénients qui s'y attachent, et que les communications de point à multipoint sont possibles comme requis.

Le commutateur élémentaire de la présente invention se caractérise en ce que lesdits moyens de sélection de mode de d'acheminement sont également prévus pour commander alternativement la mise en oeuvre d'au moins un mode d'acheminement non sélectif prédéterminé, en fonction de ladite donnée de mode d'acheminement contenue dans l'étiquette d'une cellule reçue.

Selon une autre caractéristique de l'invention ledit mode d'acheminement non sélectif comprend un mode d'acheminement de brassage consistant à acheminer la cellule reçue sur l'une de toutes les sorties du commutateur élémentaire.

Selon une autre caractéristique de l'invention, ledit mode d'acheminement non sélectif comprend un mode d'acheminement de distribution consistant à acheminer la cellule reçue sur toutes les sorties du commutateur élémentaire.

Selon encore une autre caractéristique de l'invention, lesdits moyens de sélection de mode d'acheminement sont également prévus pour recevoir une donnée semi-permanente de situation du commutateur élémentaire et pour commander sélectivement, en fonction de cette donnée semi-permanente et de ladite donnée de mode d'acheminement, la mise en oeuvre de l'un desdits dispositifs d'acheminement.

Le commutateur élémentaire de l'invention prévoit donc une sélection du mode d'acheminement qui prenne en compte la situation du commutateur élémentaire, situation qui peut être l'emplacement du commutateur élémentaire dans un réseau de connexion, ce qui conduit à la possibilité de limiter le recours au mode d'acheminement traduit à certains étages d'un réseau de connexion seulement, en réduisant d'autant les besoins en matière de transmission de données d'acheminement aux mémoires de traduction des commutateurs élémentaires.

Selon une autre caractéristique de l'invention, lesdits moyens de sélection de mode de d'acheminement sont également prévus pour recevoir une donnée semi-permanente de situation du commutateur élémentaire et pour commander sélectivement, en fonction de cette donnée semi-permanente et de ladite donnée de mode d'acheminement, la mise en oeuvre de l'un desdits dispositifs d'acheminement ou l'application d'un mode d'acheminement non sélectif.

Selon une autre caractéristique de l'invention, lesdits moyens de sélection de mode d'acheminement sont prévus pour recevoir de l'étiquette d'une cellule reçue sur l'une des entrées une donnée de mode d'acheminement qui spécifie un numéro d'étage de commutateurs élémentaires dans un réseau de commutation, et lesdits moyens de sélection de mode d'acheminement sont arrangés en sorte que la mise oeuvre du mode d'acheminement sélectionné n'ait lieu que lorsque ledit numéro d'étage est égal ou supérieur à une valeur dérivée de ladite donnée semi-permanente.

Selon une autre caractéristique de l'invention, lesdits moyens de sélection de mode d'acheminement sont prévus pour recevoir de l'étiquette d'une cellule reçue sur l'une des entrées une donnée de mode d'acheminement qui spécifie deux modes d'acheminement et un numéro d'étage de commutateurs élémentaires dans un réseau de commutation, et lesdits moyens de sélection de mode d'acheminement sont arrangés en sorte que la mise oeuvre d'un premier desdits modes d'acheminement spécifié ait lieu lorsque ledit numéro d'étage est inférieur à une valeur dérivée de ladite donnée semi-permanente, tandis que la mise en oeuvre du second desdits modes d'acheminement spécifié ait lieu lorsque ledit numéro d'étage est égal ou supérieur à ladite valeur dérivée.

Selon une autre caractéristique de l'invention, ladite indication de destination et ledit numéro de référence occupant le même champ dans l'étiquette des cellules, lesdits moyens de sélection de mode d'acheminement déterminent la transmission sélective de l'information contenue dans ledit champ, soit au dispositif d'acheminement direct, soit au dispositif d'acheminement traduit.

Selon une autre caractéristique de l'invention, lesdits moyens de sélection de mode de d'acheminement sont également prévus pour recevoir une donnée semi-permanente de priorité du commutateur élémentaire et pour commander sélectivement, en fonction de cette donnée semi-permanente et de ladite donnée de mode d'acheminement, la mise en oeuvre ou l'inhibition de tout mode d'acheminement.

L'invention a pour second object un réseau de commutation comprenant des ports d'entrée, des ports de sortie, des commutateurs élémentaires arrangés en plusieurs étages de commutateurs élémentaires interconnectés, chaque commutateur élémentaire ayant des entrées et des sorties et étant agencé pour transférer une cellule reçue sur l'une de ses entrées, sur une ou plusieurs de ses sorties, en fonction de données d'acheminement associées à ladite cellule, les ports d'entrée du réseau correspondant aux entrées des commutateurs élémentaires d'un premier étage et les ports de sortie du réseau correspondant aux sorties des commutateurs élémentaires d'un dernier étage. Ce réseau se caractérise en ce que les commutateurs élémentaires d'un des étages au moins de ce réseau de commutation sont conformes à ce que l'on vient de définir plus haut.

Selon une autre caractéristique de l'invention, les commutateurs élémentaires de tous les étages de ce réseau de commutation sont conformes à ce que l'on vient de définir.

Selon une autre caractéristique de l'invention, dans les commutateurs élémentaires d'un au moins des premiers étages du réseau de commutation, ladite donnée semi-permanente est telle qu'un mode d'acheminement de brassage est mis en oeuvre à la place des modes d'acheminement direct et traduit, selon lequel toute cellule reçue est retransmise sur l'une de toutes les sorties du commutateur élémentaire.

Selon une autre caractéristique de l'invention, dans les commutateurs élémentaires d'un au moins des premiers étages du réseau de commutation, ladite donnée semi-permanente est telle qu'un mode d'acheminement de brassage est mis en oeuvre à la place des modes d'acheminement direct et traduit, selon lequel toute cellule reçue est retransmise sur l'une de toutes les sorties du commutateur élémentaire, choisie de façon aléatoire ou quasi-aléatoire.

Selon une autre caractéristique de l'invention, dans les commutateurs élémentaires d'un au moins des premiers étages du réseau de commutation, ladite donnée semi-permanente est telle qu'un mode d'acheminement de brassage est mis en oeuvre à la place des modes d'acheminement direct et traduit, selon lequel toute cellule reçue est retransmise sur l'une de toutes les sorties du commutateur élémentaire, choisie de manière à égaliser la charge de trafic des cellules sur les sorties.

Selon une autre caractéristique de l'invention, lesdits premiers étages du réseau de commutation sont en nombre tel et sont interconnectés de façon telle qu'ils permettent l'accès de toute cellule sur n'importe laquelle des ports d'entrée à toute sortie du dernier desdits premiers étages, et dans tous les commutateurs élémentaires de plusieurs desdits premiers étages au moins, ladite donnée semi-permanente est telle qu'aucun des modes d'acheminement direct ou traduit n'est mis en oeuvre, un mode d'acheminement de brassage les remplaçant tous les deux, selon lequel toute cellule reçue est retransmise sur l'une de l'ensemble des sorties du commutateur élémentaire, choisie de manière à égaliser la charge de trafic des cellules sur ces sorties.

Les différents objets et caractéristiques de l'invention seront exposés de façon plus détaillée dans le cours de la description qui va suivre d'un exemple de réalisation de l'invention, fournie à titre non limitatif, en se reportant aux figures annexées qui représentent :
- la figure 1, le diagramme connu des circuits d'un commutateur élémentaire dans lequel est appliquée la présente invention,
- la figure 2, le format d'une étiquette de cellule, prévue pour la mise en oeuvre de la présente invention,
- la figure 3, le diagramme de circuits de sélection de sortie conformes à l'invention, applicables dans le commutateur élémentaire de la figure 1,
- la figure 4, un réseau de commutation conforme à la présente invention.

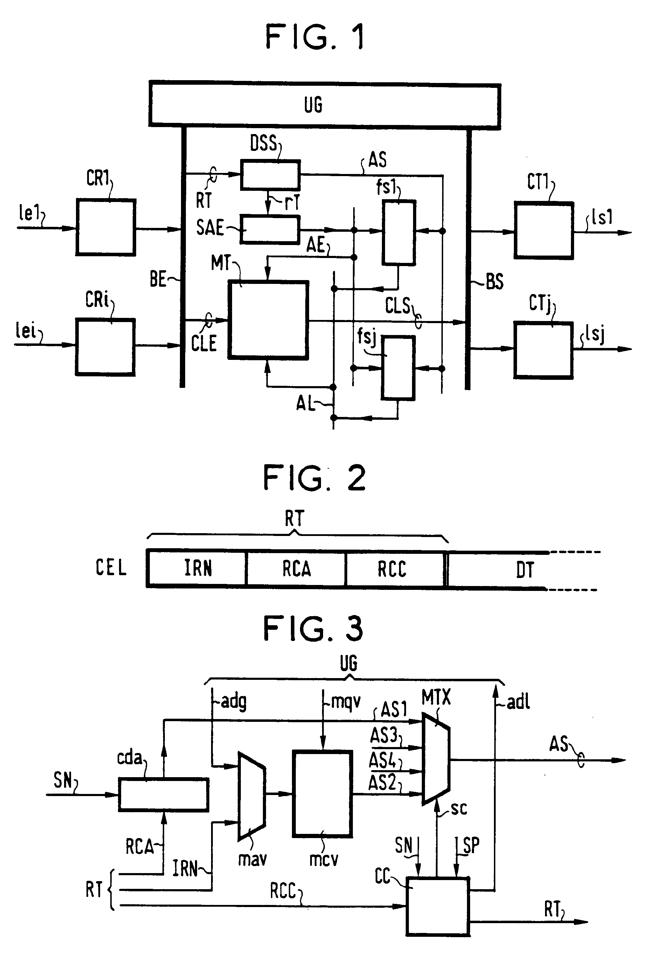

Le diagramme de la figure 1 est connu. L'invention s'applique, entre autres, aux commutateurs de ce type. Ce commutateur élémentaire assure la commutation de cellules à multiplexage temporel asynchrone entre des liaisons d'entrée le1 à lei et des liaisons de sortie ls1 à lsj.

Chaque liaison d'entrée est pourvue d'un circuit de réception, CR1 à CRi, qui détecte les cellules entrantes, les synchronise, et les transmet dans un créneau temporel affecté à la liaison d'entrée sur un bus d'entrée BE. Ce bus peut être un bus parallèle, de sorte que tous les bits d'une cellule sont accessibles en même temps. Les i créneaux des liaisons d'entrée se suivent dans un cycle récurrent de multiplexage temporel des cellules d'entrée.

Un bus similaire BS reçoit d'une façon que l'on décrira plus loin les cellules à transmettre dans j créneaux temporels successifs d'un cycle récurrent de multiplexage des cellules de sortie. Chacun de ces créneaux est affecté à une des liaisons de sortie ls1 à lsj et fournit des cellules à un des circuits de transmission correspondants CT1 à CTj. Chaque circuit de transmission assure l'interface entre le mode de transmission sur le bus BS et le mode de transmission sur les liaisons ls1 à lsj.

Chaque cellule reçue et présentée par le bus d'entrée BE est soumise à une mémoire tampon MT. Si la cellule reçue doit être retransmise, elle est enregistrée dans un emplacement de la mémoire tampon désigné par une adresse d'écriture AE fournie par une source d'adresse d'écriture SAE.

Au même instant, l'étiquette de la cellule, RT, est fournie à un dispositif de sélection de sortie DSS. Si une donnée de mode d'acheminement contenue dans l'étiquette RT est telle que la cellule doit être retransmise, le dispositif DSS fournit à la source d'adresse d'écriture SAE un signal rt qui lui commande de préparer une nouvelle adresse pour la cellule suivante. Sinon, l'adresse AE est maintenue et la cellule suivante prend la place de la cellule considérée.

De plus, le dispositif de sélection de sortie DSS, analysant l'étiquette RT, de la façon qui sera décrite plus loin en se reportant à la figure 3, marque sur une liaison de commande AS l'identité de toute sortie sur laquelle la cellule considérée doit être retransmise. En pratique, la liaison de commande AS peut comprendre j conducteurs, un par liaison de sortie et le rôle du dispositif DSS est alors de marquer d'un potentiel particulier le conducteur correspondant à toute sortie devant être ainsi sélectionnée. Chacun des conducteurs de la liaison de commande AS est connecté à l'une de j mémoires de file d'attente fs1 à fsj. Si ce conducteur est marqué, il y provoque une opération d'inscription par laquelle d'adresse AE qui est celle de l'emplacement où est enregistrée la cellule considérée dans la mémoire tampon MT, prend place dans la file d'attente. Les mémoires de files d'attente sont de préférence du type premier entré/premier sorti (FIFO). La mémoire FIFO fs1 reçoit ainsi, en fonction des étiquettes respectives des cellules reçues, les adresses des emplacements de la mémoire tampon MT contenant les cellules destinées à la liaison ls1. Il en va de même pour la mémoire fsj, à l'intention de la liaison lsj.

A l'occasion de chaque créneau temporel sur le bus de sortie BS, la mémoire FIFO correspondante est lue. Elle fournit une adresse de lecture AL. L'emplacement correspondant est lu dans mémoire MT et la cellule lue CLS est fournie sur le bus de sortie BS, pour être transmise sur la liaison de sortie correspondante.

Les cellules reçues sur les liaisons d'entrée sont ainsi temporairement enregistrées dans la mémoire MT et, par commutation temporelle entre les bus BE et BS peuvent être transférées d'une liaison d'entrée quelconque à une liaison de sortie quelconque. Le volume de la mémoire MT permet une répartition inégale du débit entre les liaisons de sortie, mais le déséquilibre entre les débits offerts aux liaisons de sortie ne doit pas causer un engorgement d'une ou plusieurs liaisons de sortie, tel que la capacité de la mémoire MT ou celle de l'une quelconque des files d'attente soit dépassée.

Par ailleurs, les moyens de commutation que l'on vient de décrire permettent de retransmettre une cellule reçue et enregistrée dans la mémoire tampon MT aussi bien sur plusieurs liaisons de sortie que sur une seule. Il suffit pour cela d'inscrire l'adresse AE de l'emplacement contenant cette cellule dans plusieurs mémoires FIFO au lieu d'une seule.

Pour conclure, au sujet de la figure 1, on mentionnera enfin l'unité de gestion UG connectée aux bus BE et BS et ainsi capable de recevoir certaines cellules, ou d'en transmettre d'autres. Cette unité de gestion contient tous les circuits auxiliaires nécessaire pour régler le fonctionnement du commutateur élémentaire, notamment une horloge dont les signaux sont distribués en vue de commander les opérations conformément à ce que l'on vient de décrire.

La figure 2 représente une cellule CEL comprenant une étiquette RT, suivie de données DT. Cette étiquette RT comprend elle-même trois parties, un champ de commande RCC, une indication de destination sous la forme d'une adresse de sortie de réseau RCA et un numéro de référence interne IRN.

Le champ de commande RCC contient une donnée de mode d'acheminement qui peut désigner un mode d'acheminement direct ou un mode d'acheminement traduit, ou encore tout autre mode prévu. Si le champ de commande RCC désigne le mode d'acheminement direct, une indication de destination tirée de l'adresse de sortie de réseau RCA doit servir à l'acheminement de la cellule sur une sortie permettant d'atteindre la destination indiquée. Si le champ de commande RCC désigne le mode d'acheminement traduit, le numéro de référence IRN doit servir à l'acheminement de la cellule sur une ou plusieurs sorties correspondantes dont les identités sont disponibles dans le commutateur élémentaire comme on va le voir maintenant, en se reportant à la figure 3.

La figure 3 représente un mode de réalisation du dispositif de sélection de sortie DSS mentionné à la figure 1 dans lequel est appliquée la présente invention.

Ce dispositif reçoit l'étiquette RT d'une cellule. Le champ de commande RCC est appliqué à un circuit de commande CC qui le décode et le combine à une donnée interne semi-permanente de situation SN et à une donnée interne semi-permanente de priorité SP, pour fournir le signal de commande sc d'un multiplexeur de commande MTX. Ce circuit de commande CC produit aussi, pour toute cellule qui doit être enregistrée dans la mémoire tampon MT, le signal rt qui commande la préparation d'une nouvelle adresse de la mémoire tampon, en vue de l'enregistrement de la cellule suivante. Il produit encore, pour toute cellule de service, qui doit être transmise à l'unité de gestion UB, au lieu des signaux sc ou rt, un signal de service adl, lequel demande à l'unité de gestion de lire la cellule alors présente sur le bus d'entrée BE.

L'adresse de sortie de réseau RCA est transmise à un dispositif de décodage d'adresse cda qui reçoit également la donnée semi-permanente SN et fournit en échange un ou plusieurs signaux sur les conducteurs d'une liaison de commande directe AS1 connectée au multiplexeur de commande MTX. Ce dispositif cda est ainsi un dispositif d'acheminement direct qui, recevant de l'étiquette d'une cellule reçue une indication de destination, la traduit en une identité de sortie correspondant à une sortie au moins.

Le numéro de référence interne IRN est appliqué, par l'intermédaire d'un multiplexeur d'adresse mav à une mémoire de traduction MCV qui fournit en échange un ou plusieurs signaux sur les conducteurs d'une liaison de commande traduite AS2 également connectée au multiplexeur de commande MTX. Cette mémoire de traduction est ainsi un dispositif d'acheminement traduit qui, recevant de l'étiquette d'une cellule reçue un numéro de référence, le traduit en une ou plusieurs identités de sortie.

Le multiplexeur de commande MTX reçoit encore des signaux sur une liaison de commande de brassage AS3 et sur une liaison de distribution AS4. Sur la liaison de commande de brassage AS3, un signal d'identité de sortie est présent sur un conducteur seulement. Les moyens employés à cette fin ne sont pas indiqués à la figure, mais peuvent comprendre un registre à décalage tel que l'identité de sortie est séquentiellement changée à chaque cellule, ou alors un circuit de sélection à fonctionnement quasi-aléatoire ou pseudo-aléatoire, ou encore un circuit de sélection couplé aux mémoires FIFO des sorties et tel que l'identité de sortie sélectionnée soit celle de la sortie la moins chargée, etc. La liaison de distribution AS4, quant à elle porte un signal par conducteur et cause la diffusion de la cellule sur toutes les sorties du commutateur élémentaire. Le multiplexeur MTX sélectionne les signaux de l'une des quatre liaisons de commande AS1, AS2, AS3, AS4 et les fournit sur la liaison de commande AS qui est celle de la figure 1, déterminant les liaisons de sorties sur lesquelles sont retransmises les cellules reçues et enregistrées dans la mémoire tampon du commutateur élémentaire.

Le multiplexeur d'adresse mav, sous la commande d'une adresse d'inscription adg transmise par l'unité de gestion UG, permet à cette unité de gestion UG d'introduire des informations d'acheminement dans la mémoire de traduction mcv, par la liaison mqv.

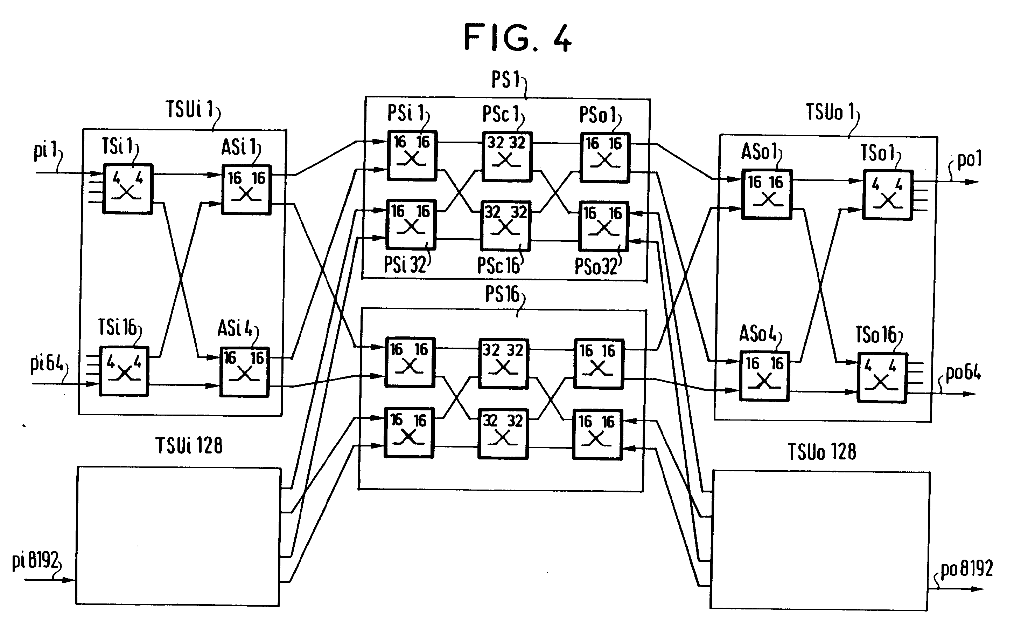

Les moyens que l'on vient de décrire permettent ainsi quatre modes d'acheminement : l'acheminement direct, l'acheminement traduit, l'acheminement de brassage et la distribution, qui vont maintenant être discutés, en se référant à la figure 4.

La figure 4 représente, à titre d'exemple, une configuration de réseau de commutation dans laquelle est appliqué un commutateur élémentaire conforme à l'invention.

Le réseau de commutation représenté est composé d'unités de sélection qui comprennent des unités terminales d'entrée TSUi, des plans de sélection PS et des unités terminales de sortie TSUo. Dans chaque unité de sélection, on trouve des commutateurs élémentaires qui peuvent être du type des figures précédentes, représentés chacun par le signe habituel d'une matrice de commutation, avec, à gauche, le nombre des entrées du commutateur élémentaire et, à droite, le nombre de ses sorties. Ces commutateurs élémentaires sont reliés entre eux par des mailles.

A l'intérieur d'une unité terminale d'entrée, TSUi1 par exemple, on trouve deux étages de commutateurs élémentaires, les commutateurs élémentaires TSi1 à TSi16 et les commutateurs élémentaires ASi1 à ASi4. Il existe une maille unique entre une sortie d'un commutateur élémentaire du premier étage et une entrée d'un commutateur élémentaire du deuxième étage. Les quatre sorties d'un commutateur du premier étage, TSi1 par exemple, sont connectées chacune à une entrée de chacun des quatre commutateurs élémentaires du deuxième étage. Donc, les 16 entrées d'un commutateur élémentaire du deuxième étage, ASi1 par exemple, sont connectées chacune à une sortie de chacun des 16 commutateurs élémentaires du premier étage. Les 64 entrées des commutateurs élémentaires du premier étage sont connectées à 64 ports d'entrée pi1 à pi64. Les autres unités terminales d'entrée peuvent être semblables, aux valeurs numériques indiquées près. Les unités terminales de sortie sont agencées de la même façon, mais symétriquement. C'est ainsi que l'unité terminale de sortie TSUo1, par exemple, donne accès, par les deux étages de commutateurs élémentaires comprenant les commutateurs élémentaires ASo1 à ASo4 et TSo1 à TSo16, à des ports de sortie po1 à po64.

La figure représente aussi des unités terminales d'entrée et de sortie TSUi128 et TSUo128, pour indiquer un nombre total d'unités terminales du réseau de commutation.

Les plans de sélection, tels que le plan de sélection PS1, comprennent trois étages de sélection formés des commutateurs élémentaires PSi1 à PSi32, PSc1 à PSc16, PSo1 à PSo32, qui peuvent être du type que l'on a défini en se reportant aux figures 1 et 3. L'arrangement des mailles internes entre un étage et le suivant obéit au principe de celui des unités de sélection terminales ; on ne le décrira pas en détail.

Il est prévu 16 plans de sélection PS1 à PS16. Les 16 sorties d'un commutateur d'une unité de sélection terminale d'entrée, TSUi1 par exemple, sont individuellement connectées, par 16 mailles, à une entrée de chacun des 16 plans de sélection. Les 4 sorties de même rang des quatre commutateurs élémentaires d'une unité terminale d'entrée, TSUi1 par exemple, sont connectées à des entrées successives d'un même commutateur élémentaire, PSi1, par exemple d'un plan de sélection, PS1 en l'occurence. Donc, les 512 entrées d'un plan de sélection, PS1 par exemple, sont connectées, quatre par quatre, au quatre commutateurs élémentaires de chacune des 128 unités terminales d'entrée.

L'agencement des mailles entres les sorties des commutateurs élémentaires du troisième étage des plans de sélection, PSo1 à PSo32 pour le plan de sélection PS1 par exemple, et les entrées des commutateurs élémentaires du deuxième étage des unités terminales de sortie est symétrique de celui que l'on vient de décrire.

L'ensemble du réseau de commutation est symétrique par rapport à l'étage central des plans de sélection. Chaque commutateur élémentaire central, tel que PSc1, accède, par trois étages de commutation, de chaque côté, à tous les ports d'entrée et à tous les ports de sortie. Réciproquement, entre un port d'entrée quelconque et un port de sortie quelconque, il existe 256 trajets distincts, passant par les 256 commutateurs élémentaires centraux. Compte tenu de ce qu'il n'y a pratiquement pas de perte interne, du fait de l'utilisation des mailles entre commutateurs par l'intermédiaire d'un enregistrement temporaire en mémoire tampon permettant une attente relativement importante, l'acheminement d'une cellule peut se faire de façon non sélective entre ce port d'entrée et l'un quelconque des commutateurs élémentaires centraux. Ensuite, l'acheminement est nécessairement sélectif, pour atteindre le port de sortie de destination. S'il s'agit d'atteindre plusieurs ports de sortie distincts, dans un acheminement de point à multipoint, cet acheminement sélectif devra comprendre plusieurs branches.

On notera que ce réseau peut comprendre plusieurs liaisons par maille, chaque maille étant alors connectée de plusieurs sorties d'un commutateur élémentaire d'un étage à plusieurs entrées d'un commutateur élémentaire d'un étage suivant, les dimensions des commutateurs élémentaires étant multipliées en conséquence. Cela permet d'augmenter la capacité d'écoulement de trafic du réseau de commutation et, éventuellement, le nombre de liaisons d'entrée et de liaisons de sorties qui sont raccordées à ses ports. Cela ne changerait rien à ce qui suit, sauf les valeurs numériques mentionnées et, dans certains cas, la nécessité d'effectuer une sélection entre les différentes sorties relatives à une même maille, selon les modalités déjà mentionnées.

En se reportant maintenant aux descriptions qui précèdent, relatives en particulier aux moyens de commande de retransmission illustrés par le dispositif de sélection de sortie des figures 1 et 3, on va définir comment les différents modes d'acheminement sont appliqués dans les commutateurs élémentaires du réseau de la figure 4.

On considèrera d'abord un acheminement direct, par exemple entre le port d'entrée pi1 et le port de sortie po1. Dans l'étiquette de la cellule, une donnée de mode d'acheminement du champ de commande RCC spécifie l'acheminement direct. L'adresse de sortie RCA comprend 7 bits désignant l'unité terminale TSUo1 et 6 bits désignant le port de sortie po1.

Dans les commutateurs élémentaires du premier étage du réseau de commutation, tels que TSi1, la donnée semi-permanente SN est telle que, combinée à la donnée d'acheminement direct, dans le circuit de commande CC, elle produise une valeur des signaux de commande sc telle que le multiplexeur MTX sélectionne la liaison de commande AS3. La cellule est retransmise sur l'une parmi l'ensemble de toutes les sorties du commutateur élémentaire. On a vu les conditions de cette sélection antérieurement. Par exemple, la cellule est ainsi retransmise vers le commutateur élémentaire ASi1.

Dans les commutateurs élémentaires du deuxième étage du réseau de commutation, tels que ASi1, la donnée semi-permanente SN a le même effet que dans le premier étage et la cellule est ainsi retransmise sur l'une parmi l'ensemble de toutes les sorties du commutateur élémentaire, par exemple celle qui conduit vers le plan PS1 et, dans celui-ci, vers le commutateur élémentaire PSi1.

Il en va encore de même dans les commutateurs élémentaires du troisième étage du réseau de commutation et la cellule parvient par exemple au commutateur élémentaire PSc1.

A partir de l'étage central, l'acheminement devient sélectif, au moins en partie.

La donnée semi-permanente SN des commutateurs de l'étage central du réseau de commutation est telle que le circuit de commande CC, par le signal de commande sc, oriente le multiplexeur MTX sur la liaison de commande AS1, tandis que cette même donnée semi-permanente SN, est appliquée au circuit de décodage cda, lequel reçoit par ailleurs l'adresse de sortie RCA. En réponse, le circuit cda sélectionne, parmi les 7 bits qui désignent l'unité terminale de destination, les 5 bits qui désignent la sortie unique conduisant vers celui des 32 commutateurs élémentaires du quatrième étage du réseau de commutation qui, dans le plan PS1, accède à l'unité terminale de destination. Ainsi est sélectionnée la sortie conduisant vers le commutateur élémentaire PSo1.

Le mode de fonctionnement est semblable à celui que l'on vient de voir, dans les commutateurs élémentaires du cinquième étage du réseau de commutation. La donnée semi-permanente SN est différente, mais provoque encore l'aiguillage du multiplexeur MTX vers la liaison de commande AS1. Toutefois, dans le circuit de décodage cda, cette nouvelle valeur de la donnée SN provoque la sélection des 2 bits restants de l'identité de l'unité terminale de destination, ce qui identifie les quatre sorties conduisant vers les quatre commutateurs élémentaires ASo1 à ASo4, selon l'exemple considéré. Une de ces quatre sorties est sélectionnée de la façon évoquée précédemment (par sélection séquentielle, quasi-aléatoire ou en fonction de la charge, comme déjà envisagé). Elle conduit la cellule, par exemple, jusqu'au commutateur ASo1.

Dans les commutateurs élémentaires du sixième étage du réseau de commutation, la donnée semi-permanente SN aiguille encore le multiplexeur MTX vers la liaison de commande AS1, tandis que le circuit de décodage est cette fois mis dans un état tel qu'il sélectionne, parmi les 6 bits de l'adresse RCA désignant le port de sortie, les 4 bits identifiant le commutateur élémentaire desservant ce port de sortie. La cellule est ainsi conduite jusqu'au commutateur élémentaire TSo1, conformément à l'exemple choisi.

Finalement, de manière similaire, dans le commutateur élémentaire du dernier étage du réseau de commutation, l'indication semi-permanente SN cause l'acheminement de la cellule sur le port de sortie po1.

Au long de cet acheminement direct, l'indication semi-permanente SN a donc d'abord permis de conduire la cellule de manière non-sélective vers un commutateur élémentaire quelconque de l'étage central, puis de la conduire, de manière sélective, en exploitant des parties successives de l'adresse de sortie RCA, vers la destination indiquée.

Il est facile de vérifier que, dans la mesure où tous les commutateurs élémentaires de l'étage central, dans un plan de sélection, voient les 32 commutateurs élémentaires du cinquième étage de ce plan de sélection de la même façon, l'acheminement est identique dans chacun d'eux. De même, dans la mesure où tous les plans de sélection voient les unités terminales de sortie de la même façon, on peut conclure que tous les commutateurs élémentaires de l'étage central effectuent l'acheminement direct de la même façon. Un raisonnement similaire aboutit à la même conclusion en ce qui concerne les commutateurs élémentaires des autres étages, du cinquième au dernier. La conclusion est que la donnée semi-permanente SN doit en fait caractériser seulement l'identité de l'étage dans lequel est inclus le commutateur élémentaire, non sa position dans l'étage.

Par ailleurs, il convient de souligner que des cellules successives, d'une même provenance et avec une même destination peuvent, principalement grâce à l'acheminement de brassage pratiqué dans les premiers étages du réseau de commutation, emprunter un grand nombre de trajets différents, ce qui réalise un brassage des courants de trafic, favorable à l'écoulement homogène des débits de cellules variés soumis au réseau de commutation.

On va maintenant traiter, par comparaison, le cas de l'acheminement traduit ; l'étiquette de la cellule contient dans le champ de commande RCC une donnée d'acheminement traduit, et contient aussi un numéro de référence interne IRN. Dans un premier temps, on supposera en outre, bien que cela ne soit pas l'utilisation préférée de ce mode d'acheminement, qu'il s'agit d'acheminer la cellule vers un seul port de sortie, à nouveau le port de sortie po1, par exemple.

Malgré une donnée d'acheminement différente, le trajet de la cellule dans la partie non sélective, jusqu'à l'étage central du réseau de commutation, reste exactement celui que l'on vient de décrire et l'amène, en reprenant l'exemple considéré, jusqu'au commutateur élémentaire PSc1.

Dans celui-ci, la valeur de la donnée semi-permanente SN est telle que le circuit de commande CC, par le signal de commande sc, aiguille le multiplexeur MTX vers la liaison de commande d'acheminement traduit AS2. Or, le numéro de référence interne IRN, par le multiplexeur mav orienté de façon approprié à ce moment-là, adresse la mémoire de traduction mcv, de sorte qu'un emplacement correspondant y soit lu. L'information d'acheminement qui s'y trouve est l'identité du commutateur du cinquième étage à atteindre, PSo1 en l'occurence.

Ensuite, dans le commutateur PSo1, le processus est strictement le même, et l'information fournie par la mémoire de traduction, lue à la même adresse, est cette fois l'identité d'une des sorties conduisant vers l'un des commutateurs élémentaires du sixième étage de l'unité terminale de sortie TSUo, ASo1 par exemple. En variante, on pourrait obtenir les identités des quatre sorties conduisant vers les quatres commutateurs élémentaires ASo1 à ASo4 de cette unité terminale, mais il faudrait alors rajouter au dispositif de la figure 3 un circuit de sélection libre tel qu'envisagée plus haut (séquentielle, quasi-aléatoire, à répartition de charge).

Il en va de même en ce qui concerne les étages suivants jusqu'au dernier.

L'acheminement traduit ainsi pratiqué offre ainsi exactement les mêmes caractéristiques que l'acheminement direct. Il permet notamment de conserver le brassage effectué dans les trois premiers étages du réseau de commutation, avec pour conséquence que le trajet de la cellule peut passer par l'un quelconque des commutateurs élémentaires de l'étage central du réseau. Mais il coûte une opération de marquage consistant à inscrire dans les mémoires de traduction des commutateurs élémentaires rencontrés sur les divers trajets que peut emprunter la cellule, une information d'acheminement contenant la ou les identités de sorties appropriées. On peut voir aisément que le minimum est alors de marquer ainsi tous les commutateurs élémentaires de l'étage central, puis un par plan dans le cinquième étage, tous les commutateurs élémentaires du sixième étage dans l'unité terminale de sortie et, finalement, le commutateur élémentaire du dernier étage desservant le port de sortie visé.

Cependant, l'acheminement traduit peut, si on le désire porter sur un plus grand nombre d'étages du réseau de commutation, ou même sur tous les étages du réseau. Il suffit de prévoir une donnée d'acheminement particulière pour ce cas, déterminant l'application de l'acheminement traduit, par exemple dès le premier étage du réseau de commutation. Il est alors possible de déterminer l'acheminement de bout en bout, en désignant, dans chaque commutateur la sortie à emprunter. Cela peut servir, notamment, dans le cadre d'opérations de maintenance. Les opérations de marquage à prévoir ne concerneront alors qu'un commutateur par étage.

Toutefois, l'avantage du mode d'acheminement traduit est essentiellement qu'il se prête à l'acheminement de point à multipoint, comme on l'a déjà expliqué. On va donc développer sur ce sujet en reprenant l'exemple d'acheminement exposé plus haut, avec brassage jusqu'à l'étage central et acheminement sélectif ensuite seulement.

Par exemple, si la cellule dont on vient de décrire l'acheminement jusqu'au port de sortie po1 doit aussi être retransmise sur d'autres sorties du commutateur élémentaire TSo1, il suffit que cela soit indiqué dans la mémoire de traduction, de manière que celle-ci fournisse, en échange du numéro de référence IRN, une information d'acheminement désignant aussi ces autres sorties.

Si, de plus, cette cellule doit aussi être retransmise sur un ou plusieurs ports de sortie desservis par d'autres commutateurs élémentaires du dernier étage, mais encore dans la même unité terminale TSU1, l'information d'acheminement du commutateur élémentaire ASo1, ou de chacun des commutateurs élémentaires ASo1 à ASo4 selon la variante envisagée plus haut, doit être également modifiée en conséquence, tandis que des informations d'acheminement appropriées doivent être inscrites dans les mémoires de traduction des autres commutateurs élémentaires du dernier étage.

On en est donc à la diffusion sur plusieurs ports de sortie quelconques d'une unité terminale. La diffusion sur plusieurs ports de sortie quelconques de plusieurs unités terminales accessibles par le même commutateur élémentaire du cinquième étage de chaque plan de sélection, demande un marquage en conséquence dans ce commutateur du cinquième étage, dans chaque plan de sélection, et les marquages adéquats dans les unités terminales concernées, comme on vient de le voir. S'il s'agit d'unités terminales dépendant de différents commutateurs du cinquième étage, il faut en outre, dans chaque plan de sélection, marquer les commutateurs de l'étage central et ces différents commutateurs du cinquième étage.

En généralisant, la diffusion peut intéresser un nombre variable d'étages du réseau de commutation, en commençant par le dernier. L'invention, en permettant de ne mettre en oeuvre l'acheminement traduit qu'à partir de l'étage central, limite déjà le recours à l'acheminement traduit.

L'invention, en offrant la possibilité d'utiliser successivement l'acheminement direct et l'acheminement traduit pour une même cellule, permet une limitation supplémentaire du recours à l'acheminement traduit, comme on va maintenant le voir.

En reprenant d'abord le cas d'une diffusion sur plusieurs ports de sortie d'un même commutateur élémentaire du dernier étage, et en se référant aux descriptions précédentes, l'acheminement direct sera pratiqué, à l'aide d'une étiquette comprenant une donnée d'acheminement RCC interprétée, dans les commutateurs des étages successifs, en fonction de la donnée semi-permanente SN de chacun d'eux, de manière à causer un acheminement de brassage jusqu'à l'étage central, un acheminement direct, jusqu'au sixième étage, dirigé par une adresse de sortie RCA qui peut être l'adresse d'une sortie quelconque du commutateur élémentaire considéré, puis l'acheminement traduit dans ce commutateur élémentaire seulement, dirigé par le numéro de référence IRN. On voit que, dans ce cas, le marquage nécessaire peut être seulement celui du commutateur intéressé.

Si la diffusion intéresse des ports de sortie de plusieurs commutateurs élémentaires d'une même unité terminale, de manière similaire, mais avec une donnée d'acheminement différente, l'acheminement direct sera employé jusqu'au cinquième étage et l'acheminement traduit concernera les deux derniers étages, dans l'unité terminale. Le marquage à effectuer sera en conséquence limité aux commutateurs intéressés de l'unité terminale.

Si la diffusion doit s'étendre dans plusieurs unités terminale accessibles par un même commutateur élémentaire du cinquième étage, de même, l'acheminement direct peut être employé pour le quatrième étage et les besoins de marquage limités en conséquence.

Tout ce que cela demande est un jeu de données d'acheminement semblables, différentes seulement en ce qu'elles désignent un étage différent à partir duquel doit être appliqué le mode d'acheminement traduit. On peut encore dire que la donnée de mode d'acheminement spécifie un numéro d'étage de commutateurs élémentaires et que les moyens de sélection de mode d'acheminement sont arrangés en sorte que la mise oeuvre du mode d'acheminement traduit n'ait lieu que lorsque le numéro d'étage est égal ou supérieur à celui qui est fourni par la donnée semi-permanente SN.

Les besoins relatifs aux informations de marquage qui doivent être inscrites dans les mémoires de traduction des commutateurs sont maintenant définis. On va voir, dans ce qui suit, comment la présente invention permet de les satisfaire de façon particulièrement simple et efficace.

Selon l'invention, ces informations de marquage, transmises dans des cellules acheminées par le réseau de commutation, parviennent aux commutateurs élémentaires de tout un étage de commutation par l'emploi du mode d'acheminement de distribution, l'emploi de la donnée interne de priorité SP permettant de s'affranchir des distributions superflues qui encombreraient inutilement le réseau de commutation.

On va donc d'abord considérer le marquage des commutateurs élémentaires de l'étage central, en vue d'un acheminement traduit visant des ports de sortie d'une même unité terminale, TSU1 par exemple. Un port d'entrée quelconque du réseau de commutation, pi1 par exemple, est utilisé pour l'entrée d'une cellule de marquage dont l'étiquette comporte une donnée d'acheminement particulière. Le numéro de référence interne et une information de marquage contenant l'identification de l'unité terminale visée sont inclus dans la partie données de la cellule.

Dans chaque commutateur traversé, l'acheminement aura lieu, à l'instar des cas d'acheminement précédents, par combinaison de la donnée d'acheminement et de la donnée semi-permanente de situation SN définissant l'étage dans lequel se trouve le commutateur. Dans le commutateur TSi1, cela cause la distribution de la cellule sur toutes les sorties. Dans le commutateur ASi1, par exemple, la donnée de priorité SP étant déterminée en conséquence, cela cause encore la distribution de la cellule sur toutes les sorties, c'est-à-dire vers une entrée de chaque plan de sélection. Par contre, dans les autres commutateurs du même étage, ASi2 à ASi4, la donnée de priorité SP est différente et inhibe l'acheminement de la cellule, ce qui est obtenu très simplement en ce que - voir figure 3 - le circuit de commande CC fournit un signal de commande sc tel que le multiplexeur MTX ne sélectionne aucune liaison de commande.

Selon une variante, l'information SP des commutateurs élémentaires ASi1 à ASi4, plutôt que d'inhiber l'acheminement d'une cellule déjà reçue dans certains de ces commutateurs élémentaires, pourrait être reportée dans les commutateurs élémentaires de l'étage précédent, accédant à ces commutateurs ASi1 à ASi4, c'est-à-dire dans les commutateurs élémentaires Tsi1 à TsiT, de telle sorte que l'acheminement d'une cellule de marquage par l'un quelconque de ces derniers commutateurs élémentaires, se traduise par la sélection du commutateur élémentaire prioritaire du deuxième étage, ASi1 en l'occurence, ce qui procure le même résultat que précédemment, en ce qui concerne l'acheminement de la cellule de marquage.

Quoi qu'il en soit, dans le commutateur PSi1 du plan PS1, le même mécanisme cause à nouveau la distribution de la cellule sur toutes les sorties. La cellule parvient ainsi à tous les commutateurs élémentaires de l'étage central de plan de sélection PS1. Il en va de même pour les autres plans. La cellule de marquage, dans chacun de ces commutateurs élémentaires, toujours en raison de sa donnée d'acheminement, donne lieu à la fourniture du signal adl (figure 3) et à la réception de la cellule par l'unité de gestion UG du commutateur élémentaire (figure 1). En retour, l'unité de gestion adresse une information d'identité de sortie à la mémoire de traduction mcv par la liaison mqv, le numéro de référence IRN étant fourni simultanément sur la ligne d'adresse adg et le multiplexeur mav étant à ce moment-là orienté en conséquence.

Le même procédé sera employé pour distribuer une cellule de marquage à des commutateurs élémentaires du cinquième étage. Dans chaque plan de sélection, tous les commutateurs élémentaires de l'étage central reçoivent cette cellule, mais le seul dans lequel la donnée de priorité SP le permet acheminera la cellule vers tous les commutateurs de l'étage suivant. Ceux-ci accepteront la cellule comme une cellule de marquage. Comme l'information de marquage contient une désignation de l'unité terminale visée (TSUo1) et en raison de ce qu'un seul commutateur élémentaire donne accès à l'unité de sélection TSUo1, seul celui-ci tiendra compte du marquage reçu et inscrira dans sa mémoire de traduction une information d'identité de sortie correspondante.

Mais, toujours selon l'invention, on prévoira de plus de combiner les deux opérations de marquage que l'on vient de décrire. En effet, le contenu de la cellule peut être identique dans les deux cas. La même cellule est ainsi transmise aux unités de gestion des commutateurs élémentaires de l'étage central et est aussi retransmise, par un commutateur élémentaire central prioritaire de chaque plan de sélection vers les commutateurs élémentaires de l'étage suivant.

Le marquage est identique s'il s'agit d'une diffusion vers des ports de sortie de plusieurs unités terminales. Il suffit que la cellule les identifie toutes. Pour cela, l'information véhiculée par la cellule de marquage peut comprendre, par exemple, un bit par unité terminale. Si la cellule n'est pas assez grande pour cela, plusieurs cellules consécutives numérotées peuvent être employées à cette fin. De cette information, chaque commutateur de l'étage central dérive les identités de sorties correspondantes. Il en va de même dans les commutateurs intéressés de l'étage suivant.

Un procédé similaire sera appliqué pour le marquage dans l'unité terminale visée, TSUo1. Une cellule de marquage contenant le même numéro de référence que dans le cas précédent, mais cette fois accompagné de l'identification du ou des ports de sortie à marquer est distribuée à tous les commutateurs ASo1 à ASo4 de l'avant-dernier étage de l'unité terminale. L'un d'entre eux, prioritaire, la retransmet aux commutateurs du dernier étage. Ceux seuls qui donnent accès aux ports de sortie visés tiendront compte du marquage reçu et inscriront, chacun dans sa mémoire de traduction une information d'identité de sortie correspondante.

La distribution aux commutateurs élémentaires ASo1 à ASo4 se fera à partir d'un commutateur élémentaire d'un plan de sélection, déterminé à cette fin et atteint par acheminement direct. Pour ce faire, l'étiquette de la cellule comprend une donnée d'acheminement particulière, interprétée comme une donnée d'acheminement direct dans les étages précédents du réseau de commutation, accompagnée d'une indication de destination quelconque de l'unité terminale TSUo1. Arrivée dans le commutateur élémentaire en question, PSo1, par exemple, cette donnée d'acheminement particulière cause la distribution sur les sorties conduisant vers l'unité terminale TSUo1 (au lieu de la sélection d'une seule sortie).

Bien entendu, dans le cas d'une diffusion visant des ports de sortie de plusieurs unités terminales, un marquage devra être effectué pour chacune d'entre elles.

On voit ainsi, en définitive, que l'invention permet de ramener les opérations de marquage, en cas de diffusion, à un marquage des plans de sélection, puis à un marquage par unité terminale visée, chaque marquage donnant lieu à l'acheminement d'une cellule (ou d'un groupe de cellules) jusqu' aux commutateurs élémentaires concernés.

Il est bien évident que les descriptions qui précèdent n'ont été fournies qu'à titre d'exemple non limitatif et que de nombreuses variantes peuvent être envisagées sans sortir pour autant du cadre de l'invention. On a déjà indiqué que le terme "cellule" devait être pris dans une acception la plus large comprenant toute forme de présentation de l'information à commuter. Par ailleurs, on vient de décrire une configuration de réseau dans laquelle s'applique l'invention. Il existe de nombreuses configurations de réseau permettant des opérations de brassage dans les premiers étages et des opérations sélectives dans les suivants. Et il existe de nombreuses configurations d'étages sélectifs comprenant des unités de sélection auxquelles il est accédé par des étages centraux eux-mêmes arrangés en unités de sélection ou autres plans de sélection. Il est bien évident que l'invention, moyennant des adaptations à la portée de l'homme de métier, y trouverait également application.

## Revendications

1. Commutateur élémentaire à plusieurs modes de fonctionnement, notamment pour la commutation de cellules à multiplexage temporel asynchrone, comprenant des entrées, des sorties, des moyens de retransmission sélective, pour retransmettre une cellule, reçue sur une de ses entrées, sur une ou plusieurs de ses sorties en fonction de données d'acheminement associées à cette cellule, ainsi que des moyens de commande de retransmission déterminant le mode de fonctionnement desdits moyens de retransmission, lesdits moyens de commande de retransmission (DSS) comprennant notamment :
- un dispositif d'acheminement direct (cda), pour recevoir de l'étiquette (RT) d'une cellule reçue sur l'une des entrées (CR1, CRi) une indication de destination (RCA) et pour la décoder en une identité de sortie (AS1) correspondant à une sortie au moins, en vue de la retransmission de la cellule sur une sortie (CT1, CTj) désignée à partir de cette identité,
- un dispositif d'acheminement traduit (mcv), pour recevoir de l'étiquette (RT) d'une cellule reçue sur l'une des entrées un numéro de référence (IRN) et pour le traduire, à l'aide d'une mémoire de traduction (mcv), en une ou plusieurs identités de sortie (AS2), correspondant chacune à une sortie au moins, en vue de la retransmission de la cellule sur une sortie pour chaque identité de sortie, désignée à partir de cette identité,
- des moyens de sélection de mode d'acheminement (CC), prévus pour recevoir de l'étiquette (RT) d'une cellule reçue sur l'une des entrées une donnée de mode d'acheminement (RCC) et prévus pour commander sélectivement, en fonction de cette donnée, la mise en oeuvre d'un dispositif d'acheminement sélectionné pouvant être l'un des dispositifs d'acheminement susmentionnés, caractérisé en ce que lesdits moyens de sélection de mode d'acheminement (CC) sont également prévus pour commander alternativement la mise en oeuvre d'au moins un mode d'acheminement non sélectif prédéterminé (S3, S4), en fonction de ladite donnée de mode d'acheminement (RCC) contenue dans l'étiquette d'une cellule reçue.

2. Commutateur élémentaire conforme à la revendication 1, caractérisé en ce que ledit mode d'acheminement non sélectif comprend un mode d'acheminement de brassage (AS3) consistant à acheminer la cellule reçue sur l'une de toutes les sorties du commutateur élémentaire.

3. Commutateur élémentaire conforme à la revendication 1, caractérisé en ce que ledit mode d'acheminement non sélectif comprend un mode d'acheminement de distribution (AS4) consistant à acheminer la cellule reçue sur toutes les sorties du commutateur élémentaire.

4. Commutateur élémentaire conforme à la revendication 1, caractérisé en ce que lesdits moyens de sélection de mode de d'acheminement (CC) sont également prévus pour recevoir une donnée semi-permanente de situation (SN) du commutateur élémentaire et pour commander sélectivement, en fonction de cette donnée semi-permanente et de ladite donnée de mode d'acheminement (RCC), la mise en oeuvre de l'un desdits dispositifs d'acheminement (cda, mcv).

5. Commutateur élémentaire conforme à l'une quelconque des revendications 1 à 3, caractérisé en ce que lesdits moyens de sélection de mode de d'acheminement (CC) sont également prévus pour recevoir une donnée semi-permanente de situation (SN) du commutateur élémentaire et pour commander sélectivement, en fonction de cette donnée semi-permanente et de ladite donnée de mode d'acheminement (RCC), la mise en oeuvre de l'un desdits dispositifs d'acheminement (cda, mcv) ou l'application d'un mode d'acheminement non sélectif (AS3, AS4).

6. Commutateur élémentaire conforme à la revendication 4 ou 5, caractérisé en ce que lesdits moyens de sélection de mode d'acheminement (CC) sont prévus pour recevoir de l'étiquette (RT) d'une cellule reçue sur l'une des entrées une donnée de mode d'acheminement (RCC) qui spécifie un numéro d'étage de commutateurs élémentaires dans un réseau de commutation, et que lesdits moyens de sélection de mode d'acheminement sont arrangés en sorte que la mise oeuvre du mode d'acheminement sélectionné n'ait lieu que lorsque ledit numéro d'étage est égal ou supérieur à une valeur dérivée de ladite donnée semi-permanente (SN).

7. Commutateur élémentaire conforme à la revendication 4, caractérisé en ce que lesdits moyens de sélection de mode d'acheminement (CC) sont prévus pour recevoir de l'étiquette (RT) d'une cellule reçue sur l'une des entrées une donnée de mode d'acheminement (RCC) qui spécifie deux modes d'acheminement et un numéro d'étage de commutateurs élémentaires dans un réseau de commutation, et que lesdits moyens de sélection de mode d'acheminement sont arrangés en sorte que la mise oeuvre d'un premier desdits modes d'acheminement spécifié (AS3) ait lieu lorsque ledit numéro d'étage est inférieur à une valeur dérivée de ladite donnée semi-permanente, tandis que la mise en oeuvre du second desdits modes d'acheminement spécifié (AS1, AS2) ait lieu lorsque ledit numéro d'étage est égal ou supérieur à ladite valeur dérivée.

8. Commutateur élémentaire conforme à l'une quelconque des revendications 1 à 7, caractérisé en ce que, ladite indication de destination (RCA) et ledit numéro de référence (IRN) occupant le même champ dans l'étiquette des cellules, lesdits moyens de sélection de mode d'acheminement (CC) déterminent la transmission sélective de l'information contenue dans ledit champ, soit au dispositif d'acheminement direct (cda), soit au dispositif d'acheminement traduit (mcv).

9. Commutateur élémentaire conforme à l'une quelconque des revendications 1 à 8, caractérisé en ce que , lesdits moyens de sélection de mode de d'acheminement (CC) sont également prévus pour recevoir une donnée semi-permanente de priorité (SP) du commutateur élémentaire et pour commander sélectivement, en fonction de cette donnée semi-permanente et de ladite donnée de mode d'acheminement (RCC), la mise en oeuvre ou l'inhibition de tout mode d'acheminement.

10. Réseau de commutation comprenant des ports d'entrée, des ports de sortie, des commutateurs élémentaires arrangés en plusieurs étages de commutateurs élémentaires interconnectés, chaque commutateur élémentaire ayant des entrées et des sorties et étant agencé pour transférer une cellule reçue sur l'une de ses entrées, sur une ou plusieurs de ses sorties, en fonction de données d'acheminement associées à ladite cellule, les ports d'entrée du réseau correspondant aux entrées des commutateurs élémentaires d'un premier étage et les ports de sortie du réseau correspondant aux sorties des commutateurs élémentaires d'un dernier étage, caractérisé en ce que les commutateurs élémentaires d'un des étages au moins de ce réseau de commutation sont conformes à l'une quelconque des revendications 1 à 9.

11. Réseau de commutation conforme à la revendication 10, caractérisé en ce que les commutateurs élémentaires de tous les étages de ce réseau de commutation sont conformes à l'une quelconque des revendications 1 à 10.

12. Réseau de commutation conforme à la revendication 11, caractérisé en ce que, dans les commutateurs élémentaires d'un au moins des premiers étages du réseau de commutation, ladite donnée semi-permanente (SN) est telle qu'un mode d'acheminement de brassage (AS3) est mis en oeuvre à la place des modes d'acheminement direct et traduit (AS1, AS2), selon lequel toute cellule reçue est retransmise sur l'une de toutes les sorties du commutateur élémentaire.

13. Réseau de commutation conforme à la revendication 10, caractérisé en ce que, dans les commutateurs élémentaires d'un au moins des premiers étages du réseau de commutation, ladite donnée semi-permanente (SN) est telle qu'un mode d'acheminement de brassage (AS3) est mis en oeuvre à la place des modes d'acheminement direct et traduit (AS1, AS2), selon lequel toute cellule reçue est retransmise sur l'une de toutes les sorties du commutateur élémentaire, choisie de façon aléatoire ou quasi-aléatoire.

14. Réseau de commutation conforme à la revendication 10, caractérisé en ce que, dans les commutateurs élémentaires d'un au moins des premiers étages du réseau de commutation, ladite donnée semi-permanente (SN) est telle qu'un mode d'acheminement de brassage (AS3) est mis en oeuvre à la place des modes d'acheminement direct et traduit (AS1, AS2), selon lequel toute cellule reçue est retransmise sur l'une de toutes les sorties du commutateur élémentaire, choisie de manière à égaliser la charge de trafic des cellules sur les sorties.

15. Réseau de commutation conforme à l'une quelconque des revendications 10 à 14, caractérisé en ce que lesdits premiers étages du réseau de commutation sont en nombre tel et sont interconnectés de façon telle qu'ils permettent l'accès de toute cellule sur n'importe laquelle des ports d'entrée à toute sortie du dernier desdits premiers étages (PSc1, PSc16, etc.), et en ce que, dans tous les commutateurs élémentaires de plusieurs desdits premiers étages au moins, ladite donnée semi-permanente (SN) est telle qu'aucun des modes d'acheminement direct ou traduit (AS1, AS2) n'est mis en oeuvre, un mode d'acheminement de brassage (AS3) les remplaçant tous les deux, selon lequel toute cellule reçue est retransmise sur l'une de l'ensemble des sorties du commutateur élémentaire, choisie de manière à égaliser la charge de trafic des cellules sur ces sorties.

## Patentansprüche

1. Elementarschalter mit mehreren Betriebsmodi, insbesondere für die Durchschaltung von Zellen im asynchronen Zeitmultiplexbetrieb, wobei der Schalter Eingänge, Ausgänge, selektive Weiterübertragungsmittel zur Weiterleitung einer Zelle, die an einem ihrer Eingänge empfangen wird, an einen oder mehrere Ausgänge abhängig von Leitwegdaten, die dieser Zelle zugeordnet sind, sowie Steuermittel für die Weiterleitung aufweist, die den Betriebsmodus der Weiterleitungsmittel bestimmen, wobei diese Steuermittel (DSS) insbesondere aufweisen:
- eine Vorrichtung zur direkten Weiterleitung (cda), um aus dem Vorspann (RT) einer an einem der Eingänge (CR1, CRi) empfangenen Zelle eine Zielangabe (RCA) zu empfangen und in Form einer mindestens einem Ausgang entsprechenden Ausgangsinformation (AS1) zu entschlüsseln, um die Zelle auf den durch diese Identität bezeichneten Ausgang (CT1, CTj) weiterzuübertragen,
- eine Vorrichtung zur übersetzten Weiterleitung (mcv), um aus dem Vorspann (RT) einer an einem der Eingänge empfangenen Zelle eine Bezugsnummer (IRN) zu empfangen und mit Hilfe eines Übersetzungsspeichers (mcv) in eine oder mehrere Identitäten von Ausgängen (AS2) umzuwandeln, entsprechend je mindestens einem Ausgang, um die Zelle auf einen Ausgang für jede durch diese Identität bezeichnete Ausgangsidentität weiterzuleiten,
- Mittel zur Selektion des Weiterleitmodus (CC), die aus dem Vorspann (RT) einer an einem der Eingänge empfangenen Zelle eine Angabe über den Weiterleitmodus (RCC) empfangen und selektiv abhängig von dieser Angabe eine ausgewählte Weiterleitvorrichtung einsetzen, die eine der oben erwähnten Weiterleitvorrichtungen sein kann, dadurch gekennzeichnet, daß die Mittel zur Auswahl des Weiterleitmodus (CC) ebenfalls vorgesehen sind, um abwechselnd mindestens einen vorbestimmten nicht selektiven Weiterleitmodus (S3, S4) abhängig von der Weiterleitmodusangabe (RCC) einzusetzen, die sich im Vorspann einer empfangenen Zelle befindet.

2. Elementarschalter nach Anspruch 1, dadurch gekennzeichnet, daß der nicht-selektive Weiterleitmodus einen statistischen Verteilmodus (AS3) enthält, der darin besteht, die empfangene Zelle auf einen Ausgang unter allen Ausgängen des Elementarschalters weiterzuleiten.

3. Elementarschalter nach Anspruch 1, dadurch gekennzeichnet, daß der nicht-selektive Weiterleitmodus einen Verteilmodus (AS4) enthält, der darin besteht, die empfangene Zelle auf alle Ausgänge des Elementarschalters zu übertragen.

4. Elementarschalter nach Anspruch 1, dadurch gekennzeichnet, daß die Mittel zur Auswahl des Weiterleitmodus (CC) auch für den Empfang einer halbpermanenten Situationsangabe (SN) des Elementarschalters und zur selektiven Steuerung des Einsatzes einer der Weiterleitvorrichtungen (cda, mcv) abhängig von dieser halbpermanenten Angabe und der Angabe über den Weiterleitmodus (RCC) vorgesehen sind.

5. Elementarschalter nach einem beliebigen der Ansprüche 1 bis 3, dadurch gekennzeichnet, daß die Mittel zur Auswahl des Weiterleitmodus (CC) weiter zum Empfang einer halbpermanenten Angabe (SN) über die Situation des Elementarschalters und zur selektiven Steuerung des Einsatzes einer der Weiterleitvorrichtungen (cda, mcv) oder der Anwendung eines nichtselektiven Weiterleitmodus (AS3, AS4) abhängig von dieser halbpermanenten Angabe und der Angabe über den Weiterleitmodus (RCC) vorgesehen sind.

6. Elementarschalter nach Anspruch 4 oder 5, dadurch gekennzeichnet, daß die Mittel zur Auswahl des Weiterleitmodus (CC) für den Empfang einer Angabe über den Weiterleitmodus (RCC), die eine Nummer einer Stufe von Elementarschaltern im Vermittlungsnetz bezeichnet, aus dem Vorspann (RT) einer auf einem der Eingänge empfangenen Zelle vorgesehen sind, und daß die Mittel zur Auswahl des Weiterleitmodus so ausgebildet sind, daß der Einsatz des ausgewählten Weiterleitmodus nur erfolgt, wenn die Nummer der Stufe gleich oder größer als ein Wert ist, der aus der halbpermanenten Angabe (SN) abgeleitet wird.

7. Elementarschalter nach Anspruch 4, dadurch gekennzeichnet, daß die Mittel zur Auswahl des Weiterleitmodus (CC) zum Empfang einer Angabe über den Weiterleitmodus (RCC), die zwei Weiterleitmodi und eine Nummer einer Stufe von Elementarschaltern in einem Vermittlungsnetz bezeichnet, im Vorspann (RT) einer auf einem Eingang empfangenen Zelle vorgesehen sind, und daß die Mittel zur Auswahl des Weiterleitmodus so ausgebildet sind, daß der Einsatz eines ersten spezifizierten der Weiterleitmodi (AS3) erfolgt, wenn die Nummer der Stufe kleiner als ein aus der halbpermanenten Angabe abgeleiteter Wert ist, während der Einsatz des zweiten spezifizierten Weiterleitmodus (AS1, AS2) erfolgt, wenn die Nummer der Stufe gleich oder größer als der abgeleitete Wert ist.

8. Elementarschalter nach einem beliebigen der Ansprüche 1 bis 7, dadurch gekennzeichnet, daß die Zielangabe (RCA) und die Bezugsnummer (IRN) das gleiche Feld im Vorspann der Zellen verwenden und daß die Mittel zur Auswahl des Weiterleitmodus (CC) die selektive Weiterleitung der in diesem Feld enthaltenen Information entweder auf die Vorrichtung zur direkten Weiterleitung (cda) oder auf die Vorrichtung zur übersetzten Weiterleitung (mcv) bestimmen.

9. Elementarschalter nach einem beliebigen der Ansprüche 1 bis 8, dadurch gekennzeichnet, daß die Mittel zur Auswahl des Weiterleitmodus (CC) auch zum Empfang einer halbpermanenten Prioritätsangabe (SP) des Elementarschalters und zur selektiven Steuerung des Einsatzes oder Nicht-Einsatzes aller Weiterleitmodi abhängig von dieser halbpermanenten Angabe und der Angabe über den Weiterleitmodus (RCC) vorgesehen sind.

10. Vermittlungsnetz mit Eingangsports, Ausgangsports, mit in mehreren Stufen angeordneten und miteinander verbundenen Elementarschaltern, wobei jeder Elementarschalter Eingänge und Ausgänge besitzt und eine an einem der Eingänge empfangene Zelle an einen oder mehrere seiner Ausgänge abhängig von der Zelle zugeordneten Leitwegdaten übertragen kann, wobei die Eingangsports des Netzes den Eingängen der Elementarschalter einer ersten Stufe und die Ausgangsports des Netzes den Ausgängen der Elementarschalter einer letzten Stufe entsprechen, dadurch gekennzeichnet, daß die Elementarschalter mindestens einer der Stufen dieses Vermittlungsnetzes die Merkmale gemäß einem beliebigen der Ansprüche 1 bis 9 enthalten.

11. Vermittlungsnetz nach Anspruch 10, dadurch gekennzeichnet, daß die Elementarschalter aller Stufen dieses Vermittlungsnetzes die Merkmale eines beliebigen der Ansprüche 1 bis 10 enthalten.

12. Vermittlungsnetz nach Anspruch 11, dadurch gekennzeichnet, daß in den Elementarschaltern mindestens einer der ersten Stufen des Vermittlungsnetzes die halbpermanente Angabe (SN) so gewählt ist, daß ein Modus der statistischen Verkehrsverteilung (AS3) anstelle des direkten und des übersetzten Weiterleitmodus (AS1, AS2) wirksam wird, so daß jede empfangene Zelle auf einen aus der Gesamtheit der Ausgänge des Elementarschalters übertragen wird.

13. Vermittlungsnetz nach Anspruch 10, dadurch gekennzeichnet, daß in den Elementarschaltern mindestens einer der ersten Stufen des Vermittlungsnetzes die halbpermanente Angabe (SN) so gewählt ist, daß ein Modus der statistischen Verkehrsverteilung (AS3) anstelle des direkten und übersetzten Weiterleitmodus (AS1, AS2) wirksam wird, wobei jede empfangene Zelle auf einen zufällig oder quasi-zufällig aus der Gesamtheit der Ausgänge des Elementarschalters ausgewählten Ausgang übertragen wird.

14. Vermittlungsnetz nach Anspruch 10, dadurch gekennzeichnet, daß in den Elementarschaltern mindestens einer der ersten Stufen des Vermittlungsnetzes die halbpermanente Angabe (SN) so gewählt ist, daß ein Modus der statistischen Verkehrsverteilung (AS3) anstelle des direkten und übersetzten Weiterleitmodus (AS1, AS2) wirksam wird, wobei jede empfangene Zelle auf einen Ausgang aus der Gesamtheit der Ausgänge des Elementarschalters übertragen wird gemäß einer Auswahl, durch die die Verkehrsverteilung der Zellen auf die Ausgänge egalisiert wird.

15. Vermittlungsnetz nach einem beliebigen der Ansprüche 10 bis 14, dadurch gekennzeichnet, daß die ersten Stufen des Vermittlungsnetzes in einer solchen Zahl vorgesehen und so miteinander verbunden sind, daß sie den Zugang jeder Zelle, die an einen beliebigen Eingangsport empfangen wird, auf alle Ausgänge der letzten aus den ersten Stufen (PSc1, PSc16 usw.) ermöglicht wird, und daß in allen Elementarschaltern von zumindest mehreren der ersten Stufen die halbpermanente Angabe (SN) so gewählt ist, daß keiner der direkten oder übersetzten Weiterleitmodi (AS1, AS2) wirksam wird und ein Modus der statistischen Verkehrsverteilung (AS3) diese beiden ersetzt, bei dem jede empfangene Zelle auf einen solchen Ausgang aus der Gruppe von Ausgängen des Elementarschalters übertragen wird, daß die Verkehrsverteilung der Zellen auf diese Ausgänge egalisiert wird.

## Claims

1. Switching element with a plurality of operating modes, in particular for switching asynchronous time-division multiplexed packets, comprising inputs, outputs, selective retransmission means for retransmitting a packet received on one input to one or more outputs on the basis of routing data associated with said packet, and retransmission control means determining the mode of operation of said retransmission means, said retransmission control means (DSS) including:
- a direct routing device (cda) adapted to receive from the label (RT) of a packet received on one input (CR1, CRi) a destination indication (RCA) and to decode it into an output identifier (AS1) corresponding to at least one output in order to retransmit the packet to an output (CT1, CTj) designated by said identifier,
- a translated routing device (mcv) adapted to receive from the label (RT) of a packet received on one input a reference number (IRN) and to translate it using a translation memory (mcv) into one or more output identifiers (AS2) each corresponding to at least one output for retransmitting the packet to one output for each output identifier designated by said identifier,
- routing mode selector means (CC) adapted to receive from the label (RT) of a packet received on one input routing mode data (RCC) and adapted to command selectively according to said data the use of a selected routing device which may be one of the above-mentioned routing devices, characterised in that said routing mode selector means (CC) are also adapted to command alternately the use of at least one predetermined non-selective routing mode (S3, S4) according to said routing mode data (RCC) contained in the label of a received packet.

2. Switching element according to claim 1 characterised in that said non-selective routing mode encompasses a cross-connect routing mode (AS3) in which the packet received is routed to one of the set of all outputs of the switching element.

3. Switching element according to claim 1 characterised in that said non-selective routing mode encompasses a broadcast routing mode (AS4) in which the receive packet is routed to all the outputs of the switching element.

4. Switching element according to claim 1 characterised in that said routing mode selector means (CC) are adapted to receive semi-permanent situation data (SN) from the switching element and to command selectively according to said semi-permanent data and said routing mode data (RCC) the use of one of said routing devices (cda, mcv).

5. Switching element according to any one of claims 1 to 3 characterised in that said routing mode selector means (CC) are adapted to receive semi-permanent situation data (SN) from the switching element and to command selectively according to said semi-permanent data and said routing mode data (RCC) use of one of said routing devices (cda, mcv) or the application of a non-selective routing mode (AS3, AS4).

6. Switching element according to claim 4 or claim 5 characterised in that said routing mode selector means (CC) are adapted to receive from the label (RT) of a packet received at one of the inputs routing mode data (RCC) which specifies a switching element stage number in a switching network and said routing mode selector means are so arranged that the selected routing mode is used only if said stage number is equal to or greater than a value derived from said semi-permanent data (SN).

7. Switching element according to claim 4 characterised in that said routing mode selector means (CC) are adapted to receive from the label (RT) of a packet received on one input routing mode data (RCC) which specifies two routing modes and a switching element stage number in a switching network and said routing mode selector means are so arranged that a first (AS3) of said specified routing modes is used if said stage number is less than a value derived from said semi-permanent data and the second (AS1, AS2) of said specified routing modes is used if said stage number is equal to or greater than said derived value.

8. Switching element according to any one of claims 1 to 7 characterised in that said destination indication (RCA) and said reference number (IRN) occupy the same field in the label of the packet and said routing mode selector means (CC) determine selective transmission of the information contained in said field either to the direct routing device (cda) or to the translated routing device (mcv).

9. Switching element according to any one of claims 1 to 8 characterised in that said routing mode selector means (CC) are adapted to receive semi-permanent priority data (SP) from the switching element and to command selectively according to said semi-permanent data and said routing mode data (RCC) the use or the inhibiting of any routing mode.

10. Switching network comprising input ports, output ports, switching elements arranged in a plurality of interconnected switching element stages, each switching element having inputs and outputs and being adapted to transfer a packet received on one of its inputs to one or more of its outputs, according to routing data associated with said packet, the input ports of the network corresponding to the inputs of switching elements of a first stage and the output ports of the network corresponding to the outputs of the switching elements of a final stage, characterised in that the switching elements of one stage at least of said switching network are as claimed in any one of claims 1 to 9.

11. Switching network according to claim 10 characterised in that the switching elements of all stages of said switching network are as claimed in any one of claims 1 to 10.

12. Switching network according to claim 11 characterised in that, in the switching elements of at least the first stages of the switching network, said semi-permanent data (SN) is such that a cross-connect routing mode (AS3) is used instead of the direct and translated routing modes (AS1, AS2), whereby any received packet is retransmitted to one of the set of all switching element outputs.

13. Switching network according to claim 10 characterised in that, in the switching elements of at least the first stages of the switching network, said semi-permanent data (SN) is such that a cross-connect routing mode (AS3) is used instead of the direct and translated routing modes (AS1, AS2) whereby any packet received is retransmitted to one of the set of all outputs of the switching element chosen randomly or quasi-randomly.

14. Switching network according to claim 10 characterised in that, in the switching elements of at least the first stages of the switching network, said semi-permanent data (SN) is such that a cross-connect routing mode (AS3) is used instead of the direct and translated routing modes (AS1, AS2) whereby any packet received is retransmitted to one of the set of all outputs of the switching element chosen to equalise the packet traffic load on the outputs.

15. Switching network according to any one of claims 10 to 14 characterised in that said first stages of the switching network are such in number and so interconnected that they enable access of any packet from any input port to any output of the last one of said first stages (PScl, PSc16, etc) and in that, in all the switching elements of several of said first stages at least, said semi-permanent data (SN) is such that neither the direct nor the translated routing mode (AS1, AS2) is used, a cross-connect routing mode (AS3) replacing them both, whereby any packet received is retransmitted to one of the set of all outputs of the switching element chosen so as to equalise the packet traffic load on the outputs.
